# EUROPEAN PATENT APPLICATION

(11) **EP 3 385 971 A1**
(43) Date of publication of application: **10.10.2018**
(21) Application number: 16822711.4
(22) Date of filing: 29.11.2016
(51) Int. Cl.: H01H 35/24, F04B 43/00

(54) **ELECTRONIC PRESSURE SWITCH**

(30) Priority: 04.12.2015 ES 201531767
(71) Applicant: Coelbo Control System, S.L., Terrassa 08228 Barcelona (ES)
(72) Inventor: GARCÍA BANÚS, Fernando, Terrassa 08228 Barcelona (ES)
(74) Representative: Balder IP Law, S.L.
(86) International application number: PCT/ES2016/070847
(87) International publication number: WO 2017/093586

(57) **Abstract**

Electronic pressure switch comprising a pressure sensor and a circuit provided in turn with a switch for the activation/deactivation of an electric pump, an input terminal and an output terminal for connection to the mains and connection between the pressure switch and the electric pump and a microcontroller for controlling the switch, which receives signals from the pressure sensor, wherein the electric circuit comprises a current sensor connected to the microcontroller, so that it can stop the operation of the electric pump due to overcurrent, thus avoiding having to mount a specific sensor in the electric pump. It also allows, by interacting with the pressure sensor through a programmed logic, an operation of the electric pump in no-load condition, without water, as well as water hammers, to be detected with greater reliability.

## Description

### TECHNICAL FIELD

The present invention relates to an electronic pressure switch of the type for controlling the current supplied to an electric pump according to the pressure detected. The object of the present invention is to provide total security for the operation of the electric pump taking advantage of the synergies between the various sensors managed by the pressure switch.

### BACKGROUND OF THE INVENTION

Pressure switches or pressure circuit breakers comprising a pressure sensor and an electric circuit provided in turn with a switch for activating/deactivating an electric pump and terminals for connection between the pressure switch and the electric pump, are known. These pressure switches also comprise a programmable microcontroller for controlling the switch, which receives signals from the pressure sensor.

In the present description, pressure switch means a switch actuated by pressure which allows maintaining the pressure of a fluid between maximum and minimum thresholds. More specifically, pressure switch does not mean an overall system that performs this function, but what it does mean is an autonomous device, which can be marketed as a separate unit and, for its complete installation, only needs to be connected with its hydraulic, electrical and electronic terminals to the installation to be controlled.

In hydraulic installations it is necessary to provide, in the power circuits of electric pumps, an overcurrent protection device to stop the operation of the electric pump in the case of detection of overcurrent, for which, in the supply circuit of the pump, and normally arranged in the latter, a current sensor is arranged that sends a signal to the pressure switch so that this activates the disconnection of the electric pump in the case of overcurrent.

This often obliges the installer to add said safety device to the electric pump when this is not fitted as standard.

On the other hand, pressure switches, depending on the type of control they perform, are divided into the following categories:
Differential pressure switch, wherein the pressure switch closes the circuit on the passage below a minimal pressure and on passing above a maximum pressure so that, during the pressure increase between the minimum and maximum pressure, the switch is closed and the electric pump works, while during the pressure decrease from maximum to minimum, the electric pump does not work.

High pressure switch, in which the switch is closed when a maximum pressure is exceeded.

Low pressure switch, in which the switch is closed when the pressure falls below a predetermined minimum pressure.

In most of the commercial devices, they are different devices, so that the user must purchase different units with different part numbers depending on the category that is needed.

On the other hand, many pressure switches incorporate a prevention mode of operation without water, based on detection of pressures below a predetermined threshold. It is a solution widely used and effective, but not optimal, because the case could occur where the negative pressure detected does not necessarily imply lack of water and operation of the electric pump simultaneously.

Another problem encountered in the installations is the lack of maintenance of the compressed air boiler, designed to keep the hydraulic circuit under pressure and to avoid pressure oscillations caused by the power on and off of the electric pump because, as is known, air is gradually lost and it is necessary to periodically refill it.

With respect to patent literature, US2007177985, in the name of Walls, describes a pumping system comprising a pressure sensor, a controller and a pump having a cavity in its structure for integrating the sensor, that is, that the sensor is not part of a pressure switch, but part of a system having a similar function to a pressure switch. The objective sought is to protect the pump from a lack of flow or excessive flow. That is, its objective is not a pressure switch, understood as an autonomous unit that an installer only needs to worry about connecting.

US20020117214, in the name of Tucker, describes a flow and pressure control system from an electronically controlled valve, a pressure sensor and a control logic. This system acts on the fluid from the valve control, and does not mention the control or protection of the pump. Nor is it a pressure switch, as understood herein.

WO2009004277 A2, in the name of Munster SIMMS, describes a system of dual control, pressure switch plus Hall effect to avoid rapid cycles in a special application where the outlets are restricted. Nor is it a pressure switch, as understood herein.

US2002/0148445 A1, in the name of Doane, describes a closed loop system with automatic adjustment for supplying or dispensing gasoline into a combustion chamber, the system uses a pressure switch and measures the current as a reference value of the loop. Nor is it a pressure switch, as understood herein.

US6109879, in the name of YAMADA, discloses a pressure supply apparatus comprising a system with an accumulator, a pressure switch, a controller, a pump and means for detecting current. However, it is not a pressure switch as is understood in the present description and besides, the pressure switch is separated from the current detection and the control system.

Devices such as that marketed under the trademark ONEMATIC are also known, which can not be considered as a pressure switch as understood in the present description, since it connects in series in the hydraulic network for which it has an inlet, an outlet and a flow sensor therein, while the pressure switches have only one connection to the line but the water does not flow therethrough.

### DESCRIPTION OF THE INVENTION

To overcome the above drawbacks, the present invention proposes an electronic pressure switch comprising:
- a protective housing
- a pressure sensor;
- a circuit provided with:
   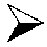 a switch for activation/deactivation of an electric pump,
   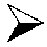 terminals for connection between the pressure switch and the electric pump,
   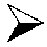 a power supply terminal,
- a microcontroller for controlling the switch, which receives signals from the pressure sensor,
   wherein the electrical circuit comprises a current sensor connected to the microcontroller, and wherein the pressure sensor, the electrical circuit and the microcontroller are arranged on the inside of the protective housing, so that it constitutes an electronic pressure switch with autonomous protection functions.

Thanks to the inclusion of the current sensor and the microcontroller, the pressure switch can extend its normal functions by adding the circuit breaking function of the electric pump due to overcurrent, so that having to set up a specific sensor in the electric pump is avoided, and it also allows, by interacting with the pressure sensor through a programmed logic, more reliably detecting the operation in no-load condition, without water of the electric pump. Thus, it can provide comprehensive protection to the electric pump.

In other words, the invention relates to a pressure switch which incorporates advanced features such as those incorporated in systems described in the background, but unlike these, it is an autonomous unit that only requires the hydraulic and sensor connections, so any installer can install it correctly.

The current sensor may be arranged in series in the circuit, in parallel in the circuit, or it may be a Hall probe or a coil sensor.

The pressure sensor is constituted by a pressure sensor and a transducer. These elements can be placed at different points, as separate elements and be connected by wiring, or may preferably be a monolithic assembly.

In some embodiments, the microcontroller is configured to open the switch in the case of detection simultaneously of a current below a minimum current threshold by the current sensor and a pressure below a minimum pressure.

By opening a circuit it should be understood that the circuit is broken. By closing the circuit it should be understood that the switch allows the flow of the current. That is, the usual meaning in the sector.

In this way, the function of detection of operation without water in order to stop the operation of the electric pump in these circumstances is implemented, all with greater reliability than a device solely based on the detection of lower pressures. This provides protection for the electric pump from lack of water by the reading of absorbed current and pressure.

In some embodiments, the microcontroller is configured to open the switch in the case of detection of a current above a maximum current threshold by the current sensor.

This feature implements the additional security protection function of the electric pump permitted by the integration of the current sensor in the pressure switch itself. That is, the electric pump is provided with protection from overcurrent.

It can also be contemplated that the pressure switch incorporates reset functions, both to reactivate the pump in the event that the electric pump has previously had its circuit broken both through the detection of operation without water and overcurrent. In these cases, a logic associated and implemented in the microcontroller, with one part fixed, i.e. basic and non-programmable by the user, and a programmable part, is contemplated. This logic associated with the reset can consist of a maximum number of iterations of reconnection attempts of the pump, after which the pressure switch issues a final malfunction warning.

In some embodiments, the microcontroller is configured to operate according to:
- a mode in which the switch closes when the pressure sensor detects the falling to a pressure below a minimum pressure and the switch opens when the pressure sensor detects the rising to a pressure above a maximum pressure; or according to
- a mode in which the switch opens when the pressure sensor detects a pressure below a minimum pressure.

Thus, the pressure switch can be used both for a mode of operation as a differential pressure switch and for a mode of minimum pressure for safety, which avoids having to purchase different units for different functions, as configuring the operating mode desired is sufficient.

In some embodiments the microcontroller is configured to operate according to a mode in which the switch opens when the pressure sensor detects a pressure above a maximum pressure.

Therefore, if in a circuit it is also desired to have a maximum pressure switch, this mode need only be configured to obtain it, which avoids having to purchase different units for different functions, as configuring the operating mode desired is sufficient.

In addition a mode can be contemplated in which the pressure switch opens when the pressure sensor detects the falling to a pressure below a minimum pressure (Pmin) and the switch closes when the pressure sensor detects the rising to a pressure above a maximum pressure (Pmax). That is, in this mode the pressure switch functions as an inversed pressure switch, which can be useful for controlling the emptying of a reservoir by pressure control.

In some embodiments, the microcontroller is configured to measure the number of pressure oscillations per time unit.

This feature allows having an electric pump protective device for protection against the rapid cycles of too frequent starting and stopping, caused, for example, by the loss of air in the hydropneumatic accumulator of the circuit.

In some embodiments, the microcontroller is configured to emit an alarm signal or to open the switch if the number of cycles of starting and stopping of the electric pump per time unit exceeds a maximum frequency.

This feature allows implementing different ways of protecting the electric pump against rapid cycles of too frequent starting and stopping.

In all the embodiments, a user interface is provided for setting the parameters of the pressure switch. This user interface consists of a keyboard, indicator lights and a display screen.

This feature allows the quick setting of the operating parameters of the pressure switch, in particular the selection of the operating mode, the maximum and/or minimum pressures, or the frequencies for the detection of the rapid cycles, by the user.

Preferably the microcontroller is a programmable microcontroller.

Very advantageously, the switch, the current sensor, the input terminal, the output terminal and a power source of the pressure switch are arranged on a first board and the microcontroller, the keyboard and the display screen are arranged on a second board.

Thus functions are segregated based on the voltage and current levels used. The electronic elements are arranged on the second board, while the first board supports the elements linked to power.

Finally, it is preferred that the first and second boards are arranged at different levels, one above the other. The inventors have found that, in this way, a compact arrangement that allows having the components within a housing of shape and volume similar to those of traditional pressure switches that installers are used to, is achieved.

### BRIEF DESCRIPTION OF THE DRAWINGS

To complete the description and to assist a better understanding of the invention's characteristics, according to an example of a practical embodiment thereof, accompanying as an integral part of the description is a set of figures, wherein, in an illustrative and non limiting way, the following has been represented:
Figure 1 is an exploded view of an electronic pressure switch.
Figure 2 is a perspective view of an assembled electronic pressure switch.
Figure 3 is a block diagram of the pressure switch according to the invention. It does not correspond to an electrical diagram.
Figure 4 is a very schematic diagram showing how the components are arranged on the support boards and their arrangement on two levels.
Figure 5 is a perspective view of the pressure switch from which the top cover of the housing has been withdrawn and in which the relative arrangement of the boards can be seen.
Figures 6 to 8 are different views of a fitting provided with the housing for the electronic pressure switch and a non-return valve integrated into the fitting itself.

### DESCRIPTION OF A PREFERRED MODE FOR CARRYING OUT THE INVENTION

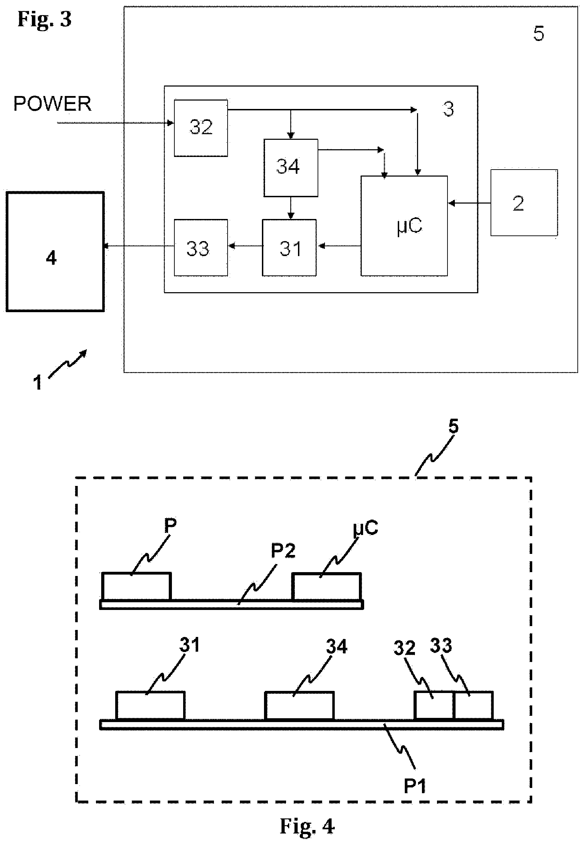

As can be seen in Figure 3, the invention generally relates to an electronic pressure switch 1 comprising:
- a pressure sensor 2 and
- a circuit 3 provided with:
   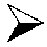 a switch 31 for the activation/deactivation of an electric pump 4,
   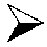 terminals 33 for connection between the pressure switch 1 and the electric pump 4,
   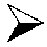 a power supply terminal 32,
- a microcontroller µC for controlling the switch 31, which receives signals from the pressure sensor 2.

The operation is as follows: the device is generally provided with a metric thread 52 which is screwed in a pressure taking point of a hydraulic circuit. Thus, it contacts the fluid with the pressure sensor 2. This sends the measure signal to the microcontroller, which decides, depending on the programming parameters, how to act on the switch 31 to open or close the power circuit of the electric pump 4. For the connection of the pressure switch 1 to the electric pump 4 terminals 33 which are passed through the hole 53 are arranged. The terminal 32 is passed through a hole 51 of the housing 5 and corresponds to the power supply of the device through the mains.

As can be seen in Figure 3, the electrical circuit 3 comprises a current sensor 34, in this embodiment arranged in series, the current sensor 34 being connected to the microcontroller µC.

Therefore, apart from interacting with the pressure sensor 2, the microcontroller µC, which preferably is a programmable microcontroller, will receive signals from the current sensor 34, which allows to establish a logical decision-making for the protection of the electric pump 4, which is not limited to only pressure. In particular, the microcontroller will be able to act on the switch 31 through only the signal received from the pressure sensor, and through only the signal received from the current sensor or through combining the signals from both sensors.

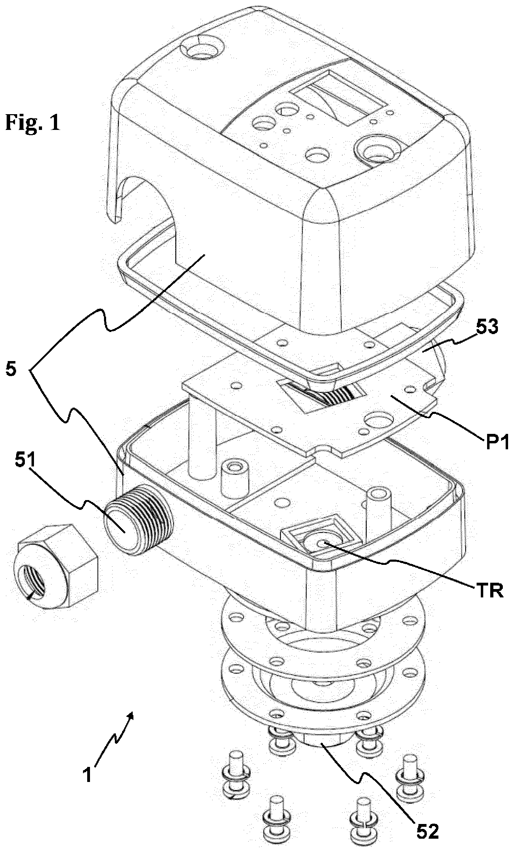

As can be seen in Figures 1 to 3, the device comprises a protective housing 5, within which the pressure sensor 2, the electrical circuit 3 and the microcontroller µC are housed.

With the incorporation in the pressure switch of the current sensor 34 and its connection to the microcontroller µC, the latter can be configured to open the switch 31 in the case of detection simultaneously of a current I below a minimum current threshold by the current sensor 34 and a pressure below a minimum pressure Pmin. Therefore, the interaction of these three elements provides additional protection to the electric pump, greater than the detection of the absence of water based solely on the pressure sensor 2.

Another possibility provided by the invention is that of configuring the microcontroller µC to open the switch 31 in the case of detection of a current I above a maximum current threshold by the current sensor 34. Therefore, instead of having to provide a specific overcurrent sensor in the electric pump 4 itself, it is sufficient to have the pressure switch of the present invention.

According to another embodiment, the microcontroller is configured to operate according to:
- a mode in which the switch 31 closes when the pressure sensor 2 detects the falling to a pressure below a minimum pressure Pmin and the switch 31 opens when the pressure sensor 2 detects the rising to a pressure above a maximum pressure Pmax; or according to
- a mode in which the switch 31 opens when the pressure sensor 2 detects a pressure below a minimum pressure Pmin, or according to
- a mode in which the switch 31 opens when the pressure sensor 2 detects a pressure above a maximum pressure Pmax, or according to
- a mode in which the switch 31 opens when the pressure sensor 2 detects the falling to a pressure below a minimum pressure Pmin and the switch 31 closes when the pressure sensor 2 detects the rising to a pressure above a maximum pressure Pmax.

According to another embodiment, the microcontroller µC is configured to measure the number of pressure oscillations per time unit, and therefore, the rapid cycles can be measured and action taken accordingly.

For example, the microcontroller µC may be configured to emit an alarm signal or to open the switch 31 if the number of cycles of starting and stopping of the pump per time unit exceeds a maximum frequency. This situation may occur, for example, when an air boiler becomes depressurised, leading to water hammers on each starting/stopping of the electric pump and an undesired increase in the pump's motor's manoeuvres, therefore, reducing its useful life.

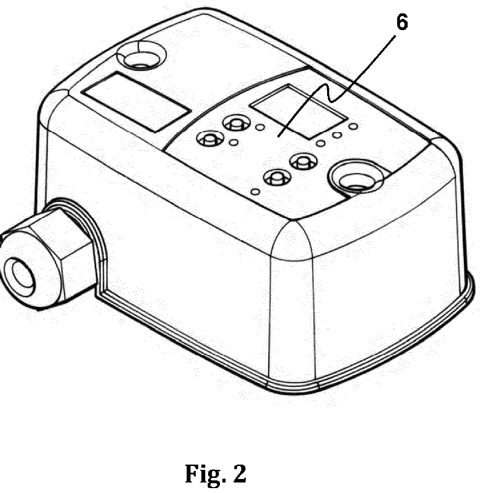

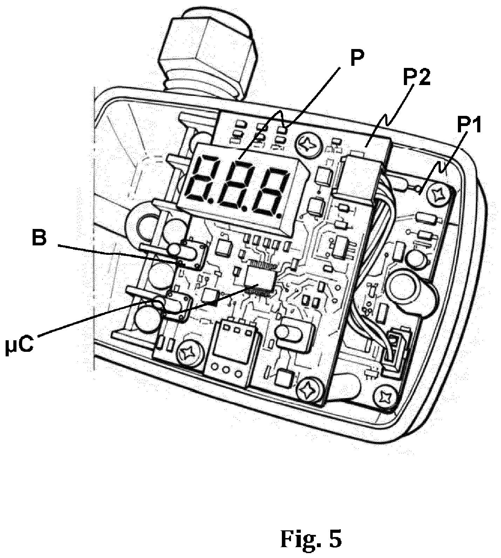

As can be seen in Figure 2, a user interface 6 is provided for setting the parameters of the pressure switch. This interface, as can be seen in Figure 5, comprises a keyboard B and a display screen P, matching with the corresponding holes in the top of the housing.

As can be seen in Figures 4 and 5, the switch 31, the current sensor 34, the terminals 33 and the power supply are arranged on a first board P1. On the other hand, the microcontroller µC, the keyboard B and the display screen P are arranged on a second board P2. The first board P1 and second board P2 are arranged at different levels, one above the other.

Here a fitting, which can operate in combination with the pressure switch of the present invention, is also described.

The five-way fittings are used to connect the hydraulic circuit to a hydrosphere, a pressure switch and a gauge provided with a reading dial. A first way is for inlet, a second for outlet, a third, facing up when installed, is for connecting a hydrosphere or boiler, a fourth is for the pressure switch and a fifth is for a gauge.

It may be the case that the pressure switch incorporates a gauge, in which case the fitting may be only four-way, or simply a lid is screwed on the remaining way.

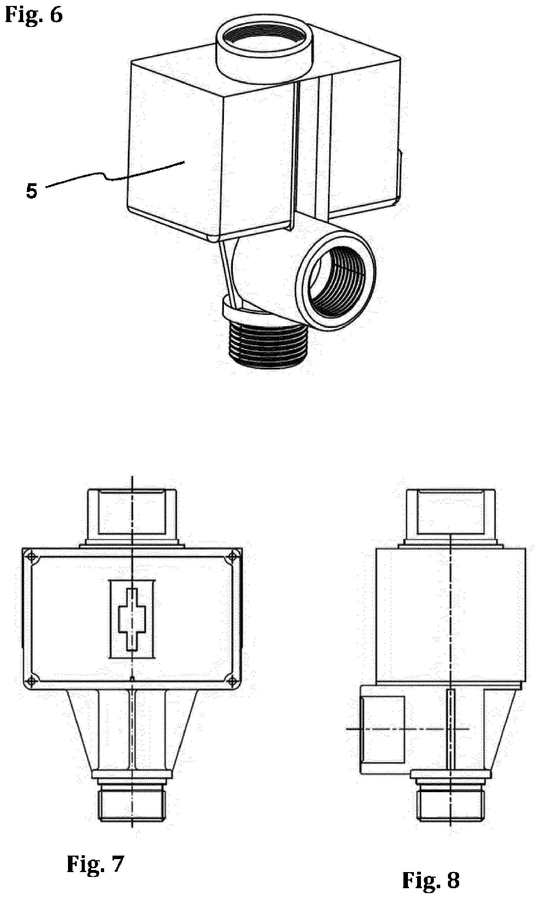

The installation is usually completed with a non-return valve, as is shown in the Figures 6 to 8, which is arranged upstream from the fitting. It can be arranged between the pump and the fitting, or upstream of the pump, in this case to prevent the loss of prime of the pump.

Therefore, this implies the installer must anticipate the installation of a non-return valve, which implies an additional component, further installation work and, in some cases, occupation of more space of the installation.

To resolve this problem, the inventors have also designed a fitting of at least four ways, each equipped with a channel and a screw thread, the first way being intended for connection to the pump, while a second way is intended for the connection with the consumption part, a third way for the connection of a pressure switch and a fourth way being intended for the connection of a hydrosphere which is characterised in that, in the channel corresponding to the first way, comprising a non-return valve.

Therefore, instead of having to provide a non-return valve, the fitting itself is provided with said valve. Moreover, it is not a valve added and attached to the inlet of the fitting, but the fixed part of the valve is composed of material of the fitting itself, the moving part or parts of the valve being arranged in the channel.

In the case of a gravity-actuated non-return valve, the moving part can be a ball, and the supporting surface of the ball is arranged in the inlet channel itself of the fitting. Also it could be a ball or equivalent provided with a spring.

The valve can be four or five-way, and can be of plastic or brass, or any other material suitable for its specific use

The pressure switch of the invention described above can be integrated in the fitting itself, as is shown in Figure 6. Thus, the connection between pressure switch and the fitting is eliminated, which achieves even greater integration. In this case, it is sufficient that the fitting, which is converted into a "smart" fitting, have only three-ways.

Therefore, in the present document a three-way fitting provided with an electronic pressure switch as that claimed is also described.

In summary, the present invention aims to, through management through software of the interaction of the different electronic components, perform the functions that a traditional electro-mechanical pressure switch performs with greater precision and to incorporate new protection functions that are traditionally resolved with the addition of devices specific to the hydraulic or electric system.

In this text, the word "comprises" and its variants should not be interpreted in an exclusive way, i.e. they do not exclude the possibility that that which is described includes other elements.

On the other hand, the invention is not limited to the specific embodiments that have been described but also covers, for example, variants that may be performed by a person with average skill in the art within that which is deduced from the claims.

## Claims

1. An electronic pressure switch (1) comprising:
• a protective housing (5);
• a pressure sensor (2);
• a circuit (3) provided with:
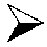 a switch (31) for the activation/deactivation of an electric pump (4),
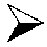 terminals (33) for connection between the pressure switch (1) and the electric pump (4),
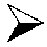 a power supply terminal (32),
• a microcontroller (µC) for controlling the switch (31), which receives signals from the pressure sensor (2),
wherein the electrical circuit (3) comprises a current sensor (34) connected to the microcontroller (µC), **characterised in that** the pressure sensor (2), the electrical circuit (3) and the microcontroller (µC) are arranged on the inside of the protective housing (5), such that it constitutes an electronic pressure switch (1) with autonomous protection functions.

2. The pressure switch according to claim 1, wherein the current sensor (34) can be a Hall probe or a coil sensor.

3. The pressure switch according to any of the preceding claims, wherein the pressure sensor (2) consists of a pressure sensor and a transducer (TR).

4. The pressure switch according to any of the preceding claims, wherein the microcontroller (µC) is configured to open the switch (31) in the case of simultaneous detection of a current (I) below a minimum current threshold by the current sensor (34) and of a pressure (2) below a minimum pressure (Pmin).

5. The pressure switch according to any of the preceding claims, wherein the microcontroller (µC) is configured to open the switch (31) in the case of detection of a current (I) above a maximum current threshold (Imax) by the current sensor (34).

6. The pressure switch according to any of the preceding claims, wherein the microcontroller (µC) can be programmed to operate according to:
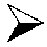 a mode in which the switch (31) closes when the pressure sensor (2) detects the falling to a pressure below a minimum pressure (Pmin) and the switch (31) opens when the pressure sensor (2) detects the rising to a pressure above a maximum pressure (Pmax); or according to 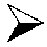
a mode in which the switch (31) opens when the pressure sensor (2) detects a pressure below a minimum pressure (Pmin), or according to 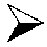
a mode in which the switch (31) opens when the pressure sensor (2) detects a pressure above a maximum pressure (Pmax), or according to 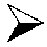
a mode in which the switch (31) opens when the pressure sensor (2) detects the falling to a pressure below a minimum pressure (Pmin) and the switch (31) closes when the pressure sensor (2) detects the rising to a pressure above a maximum pressure (Pmax).

7. The pressure switch according to any of the preceding claims, wherein the microcontroller (µC) is configured to measure the number of pressure oscillations per time unit.

8. The pressure switch according to claim 7, wherein the microcontroller (µC) is configured to emit an alarm signal or to open the switch (31) if the number of cycles of starting and stopping of the pump per time unit exceeds a maximum frequency.

9. The pressure switch according to any of the preceding claims, comprising a user interface (6) for setting the parameters of the pressure switch, the user interface comprising a keyboard (B), indicator lights and a display screen (P).

10. The pressure switch according to any of the preceding claims, wherein the microcontroller (µC) is a programmable microcontroller.

11. The pressure switch according to any of the preceding claims, comprising a power supply.

12. The pressure switch according to claims 11, 9, and 3, wherein the switch (31), the current sensor (34), the terminals (33) and the power supply are arranged on a first board (P1) and the microcontroller (µC), the keyboard (B) and the display screen (P) are arranged on a second board (P2).

13. The pressure switch according to claim 12, wherein the first board (P1) and second board (P2) are arranged at different levels, one above the other.
